# EUROPEAN PATENT APPLICATION

(11) **EP 4 826 128 A2**
(43) Date of publication of application: **21.10.2026**
(21) Application number: 26151565.4
(22) Date of filing: 13.01.2026
(51) Int. Cl.: C25B 1/04, C25B 9/75, C25B 11/031, C25B 11/042

(54) **COMPOSITE PLATE ASSEMBLY, PREPARATION METHOD THEREOF AND ELECTROCHEMICAL REACTION DEVICE**

(30) Priority: 17.04.2025 CN 202510486872
(71) Applicant: Sungrow Power Supply Co., Ltd., Hefei, Anhui 230088 (CN)
(72) Inventor: GARCIA TORREGROSA, Ivan, 1101 BV Amsterdam (NL); LIU, Fang, 81541 Munich (DE); JULIAN RODRIGUES, Simson, 81541 Munich (DE); ZHAO, Lin, 81541 Munich (DE)
(74) Representative: Zacco Norway AS

(57) **Abstract**

The present disclosure provides a composite plate assembly, a preparation method thereof and an electrochemical reaction device, in which, the composite plate assembly comprises a porous transport layer, an electrode plate and a mesh disposed between the porous transport layer and the electrode plate and in contact with the electrode plate. The composite plate assembly of the present disclosure enables the electrochemical reaction device to have significantly improved performance, such as significantly improved current distribution and/or heat distribution.

## Description

### CROSS REFERENCE TO RELATED APPLICATIONS

This application claims the priority of Chinese Patent Application No. 202510486872.1, filed with the China National Intellectual Property Administration on April 17, 2025, and titled with "COMPOSITE PLATE ASSEMBLY, PREPARATION METHOD THEREOF AND ELECTROCHEMICAL REACTION DEVICE".

### FIELD

The present disclosure relates to the technical field of electrochemical reaction devices, and in particular to a composite plate assembly, a preparation method thereof and an electrochemical reaction device.

### BACKGROUND

The electrochemical reaction device can be a water electrolyzer, a fuel cell or the like, and the water electrolyzer can be a proton exchange membrane (PEM) water electrolyzer, an anion exchange membrane water electrolyzer (AEMWE) or the like.

The electrochemical reaction device in the related art comprises an electrode plate (or referred to as a bipolar plate) and a porous transport layer (PTL). However, the electrochemical reaction device is still not satisfactory in performance, for example, in respect to the performance of the porous transport layer.

### SUMMARY

After long-term research, the present inventors have unexpectedly found that by providing the composite plate assembly of the present disclosure, an electrochemical reaction device with significantly improved performance can be provided.

Based on the above-mentioned findings, the present inventors have completed the present invention.

Accordingly, in a first aspect, a composite plate assembly for use in an electrochemical reaction device is provided by the present disclosure, comprising:
a porous transport layer,
an electrode plate, and
a mesh disposed between the porous transport layer and the electrode plate and in contact with the electrode plate.

In some embodiments, the electrode plate is a metal plate, that is, a metal-based plate, such as a titanium-based plate. In which, the titanium-based plate can comprise other metal or non-metal components in addition to metal titanium, such as titanium alloy plate; alternatively, the titanium-based plate only comprises metal titanium, such as pure titanium plate.

In some embodiments, the mesh is a metal mesh, that is, a metal-based mesh, such as a titanium-based mesh. In which, the titanium-based mesh can comprise other metal or nonmetal components in addition to metal titanium; alternatively, the titanium-based mesh only comprises metal titanium, such as pure titanium mesh. In some examples, the mesh may be a flat titanium expandable mesh.

In some embodiments, the mesh is a metal mesh and the electrode plate is a metal plate. For example, the mesh is a titanium-based mesh and the electrode plate is a titanium-based plate. Illustratively, the mesh is a pure titanium mesh, and the electrode plate is a pure titanium plate.

In some embodiments, the electrode plate and the mesh are made of the same metal material. For example, the electrode plate is a pure titanium plate and the mesh is a pure titanium mesh.

In some embodiments, flow field channels are formed on the electrode plate, and the width of the flow field channels is adapted to at least one of the thickness, pore size and porosity of the mesh, so as to ensure the fluidity of fluids such as electrolytes, reactants, products and the like in the flow field channels. More specifically, channels as flow field channels can be formed on the electrode plate, and the width of the channels is adapted to the thickness, pore size or porosity of the mesh. For example, the smaller the width of the flow field channels or channels, the smaller the thickness of the mesh, and the larger the pore size or porosity of the mesh; conversely, the greater the width of the flow field channels or channels, the greater the thickness of the mesh and the smaller the pore size or porosity of the mesh.

In some embodiments, the mesh has a thickness of 0.1 mm to 1 mm, such as 0.2 mm to 0.5 mm; alternatively, the mesh has a longest pore size (i.e. the maximum pore size) of less than or equal to 2 mm, for example, less than or equal to 1.6 mm; alternatively, the mesh has an opening ratio (porosity) ranging from 70% to 95%.

In some embodiments, flow field channels have a width of greater than 2 mm, and at least one of the following conditions is satisfied: the mesh has a thickness of 0.1 mm to 0.5mm, or the mesh has a longest pore size of 1 mm to 1.4 mm and a shortest pore size of 0.4 mm to 0.7 mm, or the mesh has a porosity of 70% to 80%; alternatively, the flow field channels have a width of 1.5 mm to 2 mm, and at least one of the following conditions is satisfied: the mesh has a thickness of 0.1 mm to 0.4 mm, or the mesh has a longest pore size of 1.2 mm to 1.6 mm and a shortest pore size of 0.5 mm to 0.8 mm, or the mesh has a porosity of 75% to 90%; alternatively, the flow field channels have a width of less than 1.5 mm, and at least one of the following conditions is satisfied: the mesh has a thickness of 0.1 mm to 0.3 mm, or the mesh has a longest pore size of 1.4 mm to 1.8 mm and a shortest pore size of 0.7 mm to 0.9 mm, or the mesh has a porosity of 80% to 95%.

In some embodiments, the direction of the maximum pore size of the mesh is perpendicular to the direction of the flow field channels on the electrode plate.

In some embodiments, the mesh is in contact with the electrode plate by welding, which can reduce the contact resistance between the electrode plate and the mesh and further ensure the structure stability of the flow field channels.

On the other hand, a method for preparing a composite plate assembly for use in an electrochemical reaction device is provided by the present disclosure, wherein the method comprises:
providing an electrode plate and a mesh; and
welding the mesh onto the electrode plate.

The composite plate assembly prepared herein may be the composite plate assembly of the first aspect above. For this preparation method, in some embodiments, the welding is performed in an inert atmosphere; in addition, the welding can be selected from the group consisting of resistance welding, ultrasonic welding, arc welding, sintering, diffusion welding and laser welding, such as laser welding.

In some embodiments, the welding is performed in nitrogen atmosphere or argon atmosphere, for example, in the airtight chamber filled with nitrogen or argon gas. The inventors unexpectedly found that the welding in nitrogen atmosphere can form a high-quality metal nitride protective layer on the surface of the metal mesh. In some embodiments, the pressure inside the airtight chamber is greater than the pressure outside the airtight chamber, that is, the airtight chamber has a pressure higher than the ambient pressure, for example, at least 50 mbar, 100 mbar, 150 mbar, 200 mbar, 300 mbar, 400 mbar or 500 mbar higher than the ambient pressure.

In some embodiments, the welding is laser welding, and the laser parameters of the laser welding, such as laser power, can be controlled so that the surface temperature of the mesh is 900°C to 1500°C.

The porous transport layer (PTL) adjacent to the electrode plate is an important component of the electrochemical reaction device. Porous transport layer is used in many electrochemical reaction devices, such as proton exchange membrane (PEM) water electrolyzer due to its high conductivity, mature technology and so on. However, electrochemical reaction devices can suffer from deterioration in the performance of current distribution and heat distribution on the surface of the porous transport layer during use. The inventor unexpectedly found that the use of composite plate assembly of the present disclosure can effectively improve the current distribution and/or heat distribution on the surface of the porous transport layer, and/or can effectively reduce the internal resistance of the electrochemical reaction device and/or improve the electrochemical reaction efficiency.

On the other hand, an electrochemical reaction device is provided, which comprises the composite plate assembly described above in the present disclosure or the composite plate assembly prepared according to the method of the present disclosure. A method for preparing an electrochemical reaction device is also provided, which comprises a step of preparing a composite plate assembly mentioned above in the present disclosure.

In some embodiments, the electrochemical reaction device is selected from the group consisting of water electrolyzers (such as proton exchange membrane water electrolyzers (PEMWE), anion exchange membrane water electrolyzers (AEMWE)) and fuel cells.

In another aspect of the present disclosure, provided is use of the composite plate assembly of the present disclosure in preparing an electrochemical reaction device (for example, an electrolyzer such as a water electrolyzer, further a proton exchange membrane water electrolyzer, an anion exchange membrane water electrolyzer, or a fuel cell).

In another aspect of the present disclosure, an electrochemical reaction method is provided, which comprises performing an electrochemical reaction by using the composite plate assembly according to the present disclosure, the composite plate assembly prepared according to the method of the present disclosure, or an electrochemical reaction device according to the present disclosure.

### BRIEF DESCRIPTION OF THE DRAWINGS

For more clearly illustrating the technical solutions in the present disclosure or the related art, the drawings for describing the present disclosure or the related art will be briefly described below. Apparently, the drawings in the following description only relate to some embodiments of the present disclosure, and other drawings may be obtained by those skilled in the art based on the drawings without any creative work.
FIG. 1 is a schematic sectional view showing a stack of an electrochemical reaction device.
FIG. 2 is a comparative schematic diagram of an ordinary flow field and an enhanced flow field, in which, FIG. 2a is a schematic diagram showing a stack of an ordinary flow field comprising an electrode plate (4) and a porous transport layer (2 and 3); and FIG. 2b is a schematic diagram showing a stack of an enhanced flow field of the present disclosure comprising an electrode plate (7), a porous transport layer (2 and 3) and a mesh (6).
FIG. 3 is a comparative schematic diagram of the effects of an ordinary flow field and an enhanced flow field, in which, FIG. 3a shows the flow field composed of an electrode plate and a carbon-based porous transport layer; FIG. 3b shows an enhanced flow field composed of an aggregate of an electrode plate and an enhanced mesh and a carbon-based porous transport layer; FIG. 3c is an upward cross-sectional view of FIG. 3a, and FIG. 3d is an upward cross-sectional view of FIG. 3b.
FIG. 4 is a 3D schematic view of a laboratory welding fixture used in the laser welding/laser nitriding process of the composite plate assembly of the present disclosure.
FIG. 5 is a schematic diagram of the tooling design of the welding fixture used in a specific embodiment of the present disclosure, in which, FIG. 5a is a top view, and FIG. 5b is a cross-sectional view along the BB direction in FIG. 5a (scale 1:2).
FIG. 6 is a scanning electron microscope (SEM) photograph of the surface morphology of the titanium nitride layer of the composite plate assembly sample prepared according to Example 1 of the present disclosure.
FIG. 7 is a FIB-SEM (focused ion beam scanning electron microscope) sectional view of the titanium nitride layer of the composite plate assembly sample prepared according to Example 1 of the present disclosure.
FIG. 8 is an X-ray diffraction pattern (XRD) of the titanium nitride layer of the composite plate assembly sample prepared according to Example 1 of the present disclosure through crystalline phase analysis.
FIG. 9 is the results of polarization curve test performed on proton exchange membrane water electrolyzer assembled according to Example 3 of the present disclosure.
FIG. 10 is a spectrum of impedance test performed on proton exchange membrane water electrolyzer assembled according to Example 3 of the present disclosure.

### DETAILED DESCRIPTION

Unless otherwise specified, the terms used in this specification and claims have the same meaning as follows.

As used herein, the term "metal mesh" or "metal-based mesh" refers to the mesh having metal as the main component or the only component, for example, the metal mesh can be an alloy mesh and a pure metal mesh.

Similarly, the term "metal plate" or "metal-based plate" refers to the plate having metal as the main component or the only component, for example, the metal plate can be an alloy plate and a pure metal plate.

As used herein, the term "titanium-based mesh" refers to the metal mesh having metal titanium as the main component or the only component. For example, the titanium-based mesh can be a titanium alloy mesh or a pure titanium mesh. Illustratively, the alloy metal of the titanium alloy mesh is selected from the group consisting of titanium, chromium, nickel, aluminum, tantalum, zirconium, tungsten and niobium. For example, the titanium alloy is titanium-chromium alloy, titanium-aluminum alloy, titanium-vanadium alloy, titanium-nickel alloy, titanium-chromium-aluminum alloy, titanium-chromium-vanadium alloy, titanium-aluminum-vanadium alloy, titanium-nickel-chromium alloy, titanium-nickel-aluminum alloy, or titanium-nickel-vanadium alloy.

Similarly, the term "titanium-based plate" refers to the metal plate having metal titanium as the main component or the only component. For example, the titanium-based plate may be a titanium alloy plate or a pure titanium plate. Illustratively, the alloying metal of the titanium alloy plate is selected from the group consisting of titanium, chromium, nickel, aluminum, tantalum, zirconium, tungsten, and niobium. For example, the titanium alloy is a titanium-chromium alloy, titanium-aluminum alloy, titanium-vanadium alloy, titanium-nickel alloy, titanium-chromium-aluminum alloy, titanium-chromium-vanadium alloy, titanium-aluminum-vanadium alloy, titanium-nickel-chromium alloy, titanium-nickel-aluminum alloy, or titanium-nickel-vanadium alloy.

The nitrogen atmosphere refers to an atmosphere having nitrogen as the basic component, and in some embodiments, the nitrogen atmosphere comprises substantially no oxygen, for example, less than 5%, 4%, 3%, 2% or 1% of oxygen. In some embodiments, the nitrogen atmosphere is substantially pure nitrogen gas, for example, the nitrogen atmosphere comprises at least 95%, 96%, 97%, 98% or 99% of nitrogen gas. The nitrogen atmosphere may comprise nitrogen gas and optional rare gas, such as argon gas.

In the present disclosure, "airtight chamber" means a space isolated from the external environment. In other words, in the process of implementing the method of the present disclosure, gas communication between the airtight chamber and the external environment is avoided, or at least gas is prevented from entering the airtight chamber from the external environment. The airtight chamber can exist in the form of a cavity or a container.

In the research, the inventor found that the porous transport layer, especially the porous transport layer with compressibility (such as carbon-based, titanium-based or nickel-based porous transport layer), will bring certain limits to the width of the flow field channels of the electrode plate. For example, under the condition that the width of the flow field channels is very large (for example, more than 2 mm), if the electrode plate is prepared by stamping process, the stress distribution on the surface of the porous transport layer will be uneven, forming high compression areas and low compression areas. This asymmetric distribution of compressive force will lead to uneven deformation or distortion in the porous transport layer or even the catalyst layer or membrane electrode adjacent to it. In extreme cases, the porous transport layer is severely deformed, which may lead to the complete blockage of the flow field channels on the electrode plate, thus blocking the material transmission in this area. This not only affects the distribution of transport reactants on the surface of catalyst layer, but also affects the transfer of reaction products away from catalyst layer. For a proton exchange membrane water electrolyzer, the reaction product hydrogen enriched at the cathode will permeate to the anode, which will lead to the increase of hydrogen content in the anode product oxygen gas, which may cause serious safety accidents. This situation is more common in the case of high working pressure, such as 30 bar.

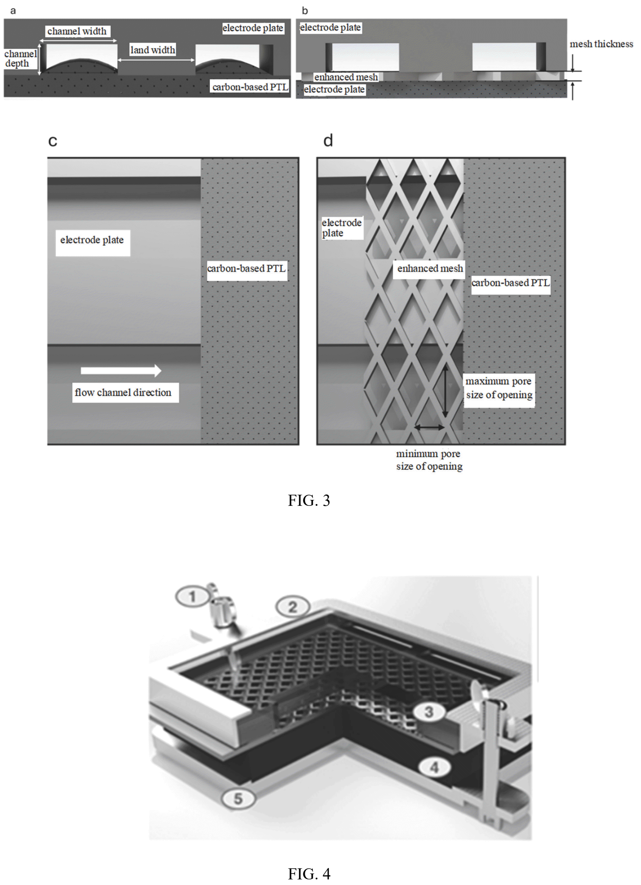

The inventors also unexpectedly found that the laser welding of the mesh and the electrode plate under nitrogen atmosphere can achieve two purposes of the laser welding and the formation of nitride protective layer in one step. By forming the metal nitride layer, the extra pretreatment or cleaning steps can be reduced or eliminated; by combining the two steps of the laser welding and the laser nitriding into one step, rapid processing can be realized, and laser welding/laser nitriding can be allowed to be performed in a short time (usually not above 1 min), which minimizes the space used in the factory. For example, titanium nitride protective layer can be formed by laser welding titanium-based mesh and electrode plate under nitrogen atmosphere. FIG. 4 is a 3D schematic diagram of a laboratory welding fixture used in the laser welding/laser nitriding process of the composite plate assembly of the present disclosure, in which, 1 is a fastening bolt, 2 is a stainless steel top frame, 3 is a molten quartz plate, 4 is a graphite base, and 5 is a stainless steel bottom frame.

On this basis, in the first aspect, a composite plate assembly for use in an electrochemical reaction device is provided by the present disclosure, which comprises a porous transport layer, an electrode plate, and a mesh disposed between the porous transport layer and the electrode plate and in contact with the electrode plate.

In some embodiments of the present disclosure, the mesh is a metal mesh and the electrode plate is a metal plate. This is beneficial to allow the use of thinner porous transport layers (such as carbon-based, titanium-based, or nickel-based porous transport layers), thus improving the micro-flow field. In some specific embodiments, the electrode plate and the mesh are made of the same metal material, for example, the electrode plate is a titanium-based plate and the mesh is a titanium-based mesh.

In some embodiments of the present disclosure, the mesh is in contact with the electrode plate by welding, which can reduce the contact resistance between the electrode plate and the mesh and/or further ensure the structure stability of the flow field channels.

In some embodiments, the electrode plate has flow field channels formed thereon, and the width of the flow field channels is adapted to at least one of the thickness, pore diameter and porosity (i.e., opening ratio) of the mesh, so as to ensure the fluidity of fluids such as electrolytes, reactants, products, and the like in the flow field channels. More specifically, the electrode plate can have channels as flow field channels and corresponding lands formed thereon, and the width of the channels is, for example, adapted to the thickness, pore size or porosity of the mesh, for example, the smaller the width of the flow field channels, the smaller the thickness of the mesh, and the larger the pore size or porosity of the mesh; conversely, the greater the width of the flow field channels, the greater the thickness of the mesh and the smaller the pore size or porosity of the mesh.

In the present disclosure, the mesh may have a suitable thickness, such as 0.1 mm to 1 mm, or 0.2 mm to 0.5 mm, specifically, such as 0.1 mm, 0.2 mm, 0.3 mm, 0.4 mm, 0.5 mm, 0.6 mm, 0.7 mm, 0.8 mm, 0.9 mm or 1 mm.

In the present disclosure, the mesh may have mesh holes (openings) of any shape, such as circle, ellipse, polygon (such as triangle, quadrilateral, hexagon), such as rectangle, diamond or square.

In the present disclosure, the mesh may have an appropriate mesh size (opening size), for example, the longest pore size of the mesh is less than or equal to 2 mm, such as less than or equal to 1.9 mm, 1.8 mm, 1.7 mm, 1.6 mm, 1.5 mm, 1.4 mm, 1.3 mm, 1.2 mm, 1.1 mm or 1.0 mm.

The inventors found that when the porosity of the metal mesh is as high as possible, the influence on the fluidity of gas and liquid can be minimized while maintaining the mechanical strength to prevent the deformation of the porous transport layer. In the present disclosure, the mesh may have certain porosity, such as 70% to 95%, such as 75% to 85%, such as 75% to 80%. When the thickness of the mesh (grid thickness) is sufficient, greater porosity can be allowed. The inventors have found that porosity below 60% may lead to poor mass transfer, especially under high working pressure, such as 30 bar air pressure. In the proton exchange membrane water electrolyzer, by distributing pressure on the porous transport layer, the uneven deformation or distortion of the porous transport layer and the catalyst layer or membrane electrode can be reduced, and the enrichment of hydrogen at the cathode and the permeation of hydrogen to the anode can be reduced.

The thickness of the mesh can usually be kept between 0.1 mm and 1 mm, for example between 0.2 mm and 0.5 mm. However, adding the thickness of a mesh will increase the weight and cost of the electrolyzer. In order to prevent accidental deformation of the geometry of the proton exchange membrane, the longest pore size of the mesh can be within 2 mm, for example, below 1.6 mm. According to the width of the channels of the electrode plate, the thickness, longest pore size and shortest pore size (i.e. minimum pore size) and porosity of the enhanced mesh are designed.

In some embodiments, the thickness (i.e., grid thickness), the longest pore size, shortest pore size and porosity (i.e., opening ratio) of the mesh of the present disclosure have the characteristics as described in Table 1 below.

**Table 1**

| **Flow field channel type** | **Channel width** | **grid thickness** | **longest pore size** | **shortest pore size** | **Opening ratio** |
|---|---|---|---|---|---|
| Thick flow field channel | >2 mm | 0.3 - 0.5 mm | 1 - 1.4 mm | 0.4 - 0.7 mm | 70 - 80 % |
| Medium flow field channel | 1.5 - 2 mm | 0.2 - 0.4 mm | 1.2 - 1.6 mm | 0.5 -0.8 mm | 75 - 90 % |
| Fine flow field channel | < 1.5 mm | 0.1 - 0.3 mm | 1.4 - 1.8 mm | 0.7 - 0.9 mm | 80 - 95 % |

In which, the type of the flow field channels is determined based on the width of the flow field channels, which is formed based on the channels on the electrode plate, so the width of the flow field channels is also the width of the channels, and the corresponding type of the flow field channels is determined based on the width of the channels. For example, when the width of the channels is more than 2 mm, the flow field channels are thick flow field channels.

Accordingly, in some embodiments, the flow field channels have the width of more than 2 mm, and at least one of the following conditions is satisfied: the mesh has a thickness of 0.3 mm to 0.5 mm, or the mesh has a longest pore size of 1 mm to 1.4 mm and a shortest pore size of 0.4 mm to 0.7 mm, or the mesh has a porosity of 70% to 80%; or
the flow field channels have a width of 1.5 mm to 2 mm, and at least one of the following conditions is satisfied: the mesh has a thickness of 0.2 mm to 0.4 mm, or the mesh has a longest pore size of 1.2 mm to 1.6 mm and a shortest pore size of 0.5 mm to 0.8 mm, or the mesh has a porosity of 75% to 90%; or
the flow field channels have a width of less than 1.5 mm, and at least one of the following conditions is satisfied: the mesh has a thickness of 0.1 mm to 0.3 mm, or the mesh has a longest pore size of 1.4 mm to 1.8 mm and a shortest pore size of 0.7 mm to 0.9 mm, or the mesh has a porosity of 80% to 95%.

By adapting the width of the flow field channels to at least one of the thickness, pore size and porosity of the mesh, it is beneficial to ensure the transport performance and balance the weight and cost of the composite plate assembly at the same time.

In some embodiments, the direction of the longest pore size of the mesh is perpendicular to the direction of the flow field channels on the electrode plate.

In another aspect, a method for preparing a composite plate assembly is provided by the present disclosure, which comprises providing an electrode plate and a mesh; and welding the mesh onto the electrode plate. In some embodiments, the welding is performed under an inert atmosphere, such as nitrogen atmosphere or argon atmosphere. In some embodiments, the welding is performed in an airtight chamber, where the pressure inside the airtight chamber is greater than the pressure outside the airtight chamber.

Specifically, the welding operation may be performed by resistance welding, ultrasonic welding, arc welding, sintering, diffusion welding or laser welding, for example, by laser welding. When laser welding is performed, the welding parameters of the laser welding, such as welding power, welding duration, welding times, etc., can be controlled so that the surface temperature of the mesh is between 900°C and 1500°C.

In some embodiments, laser welding can be achieved by scanning with a laser. In some embodiments, the laser scanning may be performed one or more times; for example, laser scanning is performed at least 2 times, 3 times, 4 times, 5 times, 6 times, 7 times, 8 times, 9 times, 10 times or more.

In some embodiments, laser welding can be performed using a single laser source or multiple laser sources.

In some embodiments, laser welding is performed using a pulsed laser source.

In some embodiments, the airtight chamber can be provided with a laser, such as a diode fiber laser or an ultraviolet diode laser.

In some embodiments, the laser welding can be performed using a plate clamp, for example, clamping an electrode plate using a titanium plate clamp. Illustratively, referring to FIG. 4, in some embodiments, the method for preparing the composite plate assembly comprises the step of aligning the electrode plate with the graphite base; in some embodiments, the method for preparing the composite plate assembly comprises the step of placing and fixing the frame on a metal mesh by using a molten quartz plate to reach a contact pressure of 0.5 Mpa to 1 Mpa; in some embodiments, the method for preparing the composite plate assembly comprises the steps of welding and/or surface nitriding the metal mesh/electrode plate in a nitrogen airtight chamber.

In some embodiments, referring to FIG. 4, the method for preparing the composite plate assembly comprises the following steps: aligning the electrode plate with the graphite base; aligning the metal mesh with the electrode plate; placing and fixing the frame on a metal mesh by using a molten quartz plate to reach a contact pressure of 0.5 Mpa to 1 Mpa; welding and/or surface nitriding the metal mesh and electrode plate in a nitrogen airtight chamber.

In another aspect of the present disclosure, a composite plate assembly prepared by the method of the present disclosure is provided. In some embodiments, in the composite plate assembly, the mesh is a titanium-based mesh, and the electrode plate is a titanium-based plate, which has a titanium nitride (TiN) protective layer at the welding joint. In some embodiments, the thickness of the nitride protective layer is 0.5 micron to 10 microns.

The electrochemical reaction device of the present disclosure may comprise the above composite plate assembly or the composite plate assembly prepared by the above method. This electrochemical reaction device can be a water electrolyzer or fuel cell, and the water electrolyzer, for example, is proton exchange membrane water electrolyzer or anion exchange membrane water electrolyzer. Further, the electrochemical reaction can be performed using the above composite plate assembly, electrochemical reaction device or composite plate assembly or electrochemical reaction device prepared by the above method to obtain improved reaction efficiency.

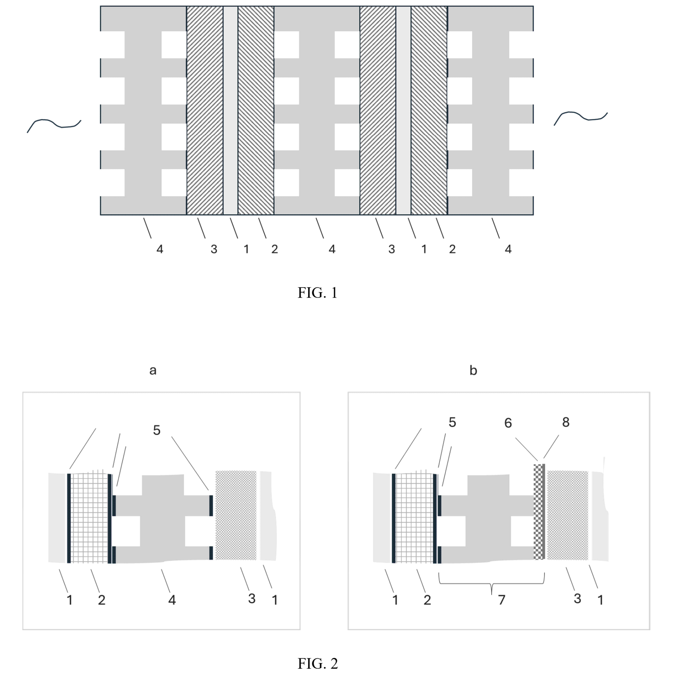

In some embodiments of the present disclosure, the electrochemical reaction device has the schematic cross-sectional view of a stack as shown in FIG. 1. In which, 1 is an assembly comprising a separator, an anode and a cathode catalyst layer, which is called CCM (catalyst coated membrane) in some applications (such as fuel cells and water electrolyzers); 2 and 3 are porous transport layers, one at the anode and the other at the cathode; and 4 is the electrode plate.

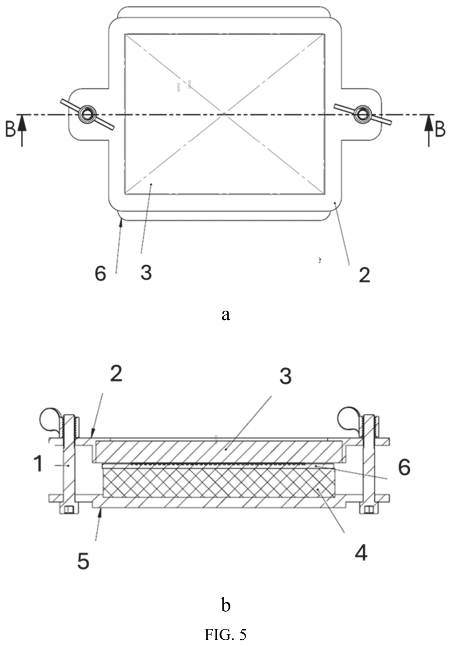

The ordinary flow field of the electrochemical reaction device in the related art has a schematic diagram as shown in FIG. 2a, in which, 1 to 4 have the same meaning as FIG. 1, and 5 is a coating prepared on the surface of the electrode plate and the porous transport layer. The schematic diagram of a stack of an enhanced flow field comprising an electrode plate and a porous transport layer of the present disclosure is shown in FIG. 2b, in which, 1 to 5 have the same meanings as inFIG. 2a, 6 is a metal mesh, 7 is an enhanced flow field composed of electrode plates and metal mesh, and 8 is a nitride layer generated on the surface of one side of the metal mesh of 7. FIG. 3 is a comparative schematic diagram of an ordinary flow field and the enhanced flow field, in which, FIG. 3a shows the flow field composed of an electrode plate and a carbon-based porous transport layer; FIG. 3b shows an enhanced flow field composed of an aggregate of an electrode plate and an enhanced mesh and a carbon-based porous transport layer; FIG. 3c and FIG. 3d are bottom cross-sectional views of FIG. 3a and FIG. 3b, respectively.

In the present disclosure, a certain channels can be machined on the electrode plate as flow field channels according to needs to transport fluids (reactants and/or reaction products). The protruding part between adjacent channels is called land, which is used to support other components, such as porous transport layer. Meanwhile, the lands are also used to conduct electricity and heat. The distribution of channels and lands constitutes the macroscopic flow field of electrochemical reactor, while the porous transport layer immediately adjacent to the electrode plate constitutes the microscopic flow field. The combined action of the two enables uniform distribution of fluids on the surface of the catalyst layer, which is one of the important factors affecting the performance of electrochemical reaction device.

The electrode plate in the present disclosure can be made of metal materials, such as stainless steel 316L. In some application scenarios, such as proton exchange membrane water electrolyzer, pure titanium can be used to prepare electrode plates. Due to the high hardness but very low elongation at break of pure titanium (approximately 30% for Ti), the channel width of titanium-based plate is usually relatively large when it is processed, for example, by stamping. Under a given flow field area, the increase of channel width means the decrease of land width, that is, it reduces the mechanical support for other components, and may also affect the stress and current distribution in the whole flow field.

The porous transport layer is a kind of interconnected void network structure, which allows fluids such as electrolyte to flow through, and examples include carbon-based porous transport layer, titanium-based porous transport layer and nickel-based porous transport layer.

In the present disclosure, a channel means a recessed portion on the electrode plate.

In the present disclosure, a land means a relatively raised portion on the electrode plate.

In this disclosure, "flow field" refers to the distribution of lands and channels on the cathode plate or anode plate, which presents a specific pattern and allows fluids such as electrolytes, reactants and products to flow through the channels, and the lands can be used to realize the functions of mechanical support, electrical conductivity and thermal conductivity.

In the present disclosure, the flow field channels can be formed by engraving, for example, by stamping.

In the present disclosure, "mesh" has the meaning commonly understood in the art, and it has crisscrossed nodes. In the present disclosure, the mesh is used to strengthen the flow field of the electrode plate, and which itself forms a grid structure.

In the present disclosure, the pore size of the grid can generally refer to the distance between the center of a single grid and the farthest point of the edge of the grid. In an example, if the grid is rhombic, the pore size of the grid usually refers to the distance between the center of the grid and the distant vertex of the rhombic (the longest pore size), and sometimes the pore size of the grid is further characterized by the shortest pore size (the distance between the center of the grid and the near vertex of the rhombic).

In the present disclosure, the mesh should have an appropriate porosity. The porosity of the mesh, also known as the opening ratio, refers to the percentage of the area occupied by the hollow parts in the mesh.

In the description of this specification, description relating to terms "some embodiments", "some examples", "for example" or "an embodiment" etc. means that a specific feature, structure, material, or characteristic described in conjunction with embodiment or example is included in at least one embodiment or example of the present disclosure. In this specification, the above terms are schematic. In addition, the described specific feature, structure, material, or characteristic may be combined in one or more embodiments or examples in any appropriate manner. In addition, those skilled in the art can combine different embodiments or examples described in this specification and combine features of different embodiments or examples, unless they are contradictory.

The embodiments of the present disclosure (including descriptions provided in the embodiments) are intended to illustrate the embodiments of the present disclosure and are not intended to limit the scope of any claim. According to the present disclosure, those skilled in the art will understand that many changes can be made to the disclosed specific embodiments and the same or similar results can still be obtained without departing from the spirit and scope of the present disclosure.

In the present disclosure, the electrode plate is usually preformed, and here the forming refers to engraving on one or both sides of the electrode plate to form lands and channels (flow field channels), thereby forming a pre-designed flow channel pattern.

Engraving can be performed mechanically by rotating tools or chemically by acid etching. However, the above-mentioned mechanical and chemical methods of engraving metal plates may lead to the disadvantages of high cost and low yield. In addition, acid etching also has environmental problems. In some embodiments, the engraving method is stamping, which has the advantages of very high yield and low cost, and is an ideal choice for large-scale manufacturing of bipolar plates. Compared with mechanical processing or chemical etching, stamping allows use of thinner substrates, such as about 0.5 mm or thinner substrates. The lightweight of electrochemical components facilitates large-scale production and assembly.

The electrode plate in the present disclosure is, for example, a titanium-based plate.

In the case of a titanium-based plate made of a titanium alloy, titanium may account for more than 75%, more than 80%, more than 85%, more than 90% or even more than 95% by mass in the alloy.

In addition, the alloy material may be an alloy composed of primary component elements and secondary component elements. For example, the primary component element is titanium, and the secondary component element can be nickel.

In the method of the present disclosure, the laser may be generated by a suitable laser generating device.

The laser may have a wavelength or an average wavelength of 800 nm to 1200 nm, 400 nm to 550 nm, or 450 nm to 500 nm. The laser may have a power of 10 W to 2000 W, such as 50 W to 1000 W, such as 50 W to 700 W.

In the present disclosure, the laser source used in the laser welding method can be a continuous-wavelength laser source or a pulsed laser source. Alternatively, the laser used in the laser welding method can work in continuous or pulsed mode. Continuous laser has simple equipment and rapid processing process, but it is difficult to control the temperature, which is more suitable for thicker materials, such as materials with a thickness greater than 1 mm. In this mode, the laser beam can form a certain shape (for example, rectangular shape) and be projected on the surface of the sample, and the scanning can be completed by moving the laser head or the welding fixture, or by moving the laser head and the welding fixture towards each other (reversely). When using pulsed laser processing, the laser head and welding fixture can remain stationary, and the vibrating mirror system integrated in the laser head can project the required shape along the surface to complete scanning. The surface temperature of the sample can be well controlled by using pulsed laser, which is especially suitable for thin samples, such as bipolar plates with a thickness less than 1 mm.

In some embodiments, the parameters of continuous laser welding includes that the laser is a single-mode laser, the defocus is 0, the welding speed is 4 mm/s to 20 mm/s, for example, 6 mm/s to 12 mm/s, and the laser power is 50 W/cm² to 1000 W/cm², for example, 100 W/cm² to 200 W/cm².

In some embodiments of the preparation method of the present disclosure, the electrode plate and the metal mesh can be pressed by a fixture to make the welding area closely attached, and the welding can be performed in an airtight chamber filled with inert atmosphere (such as argon, etc.), thus being beneficial to better reducing the contact resistance. FIG. 5 is a schematic diagram of the tooling design of the welding fixture used in the present disclosure, in which, FIG. 5a is a bottom view, and FIG. 5b is a cross-sectional view along the BB direction in FIG. 5a (scale 1:2); in the figure, 1 is a fastening bolt and a cushion spring, 2 is a stainless steel top frame, 3 is a transparent molten quartz, 4 is a graphite base, 5 is a stainless steel bottom frame, and 6 is an electrode plate and a metal mesh.

When the laser welding is used, a transparent molten quartz plate can be placed on the metal mesh, and then pressed together with a fixture, and welding can be performed in an airtight chamber filled with inert atmosphere (such as argon, etc.).

In some embodiments, the above-mentioned inert atmosphere can be replaced by nitrogen gas and laser welding can be used, so that a metal nitride layer can be formed on the surface of the metal mesh. By this method, a high-quality nitride protective layer can be formed, that is, a crystalline phase structure with high crystallinity and high stoichiometric ratio can be formed, so that additional treatment or cleaning steps in advance can be reduced or eliminated.

In the preparing method of the present disclosure, the two steps of laser welding and laser nitriding can also be combined into one step, that is, laser treatment can be used in a nitrogen atmosphere to weld the electrode plate and the mesh together meanwhile forming a nitride protective layer on the surface of the metal mesh. By combining the two steps of laser welding and laser nitriding into one step, rapid processing can be realized, allowing laser welding/laser nitriding to be performed in a short time (usually not above 1 min), which minimizes the space used in the factory.

The present disclosure achieves at least one of the following technical beneficial effects:
1. By using the composite plate assembly of the present disclosure, the current distribution and heat distribution on the surface of the porous transport layer can be effectively improved through the mesh arranged between the electrode plate and the porous transport layer.
2. By using the composite plate assembly of the present disclosure, a thinner porous transport layer (such as a carbon-based porous transport layer) is allowed to be adopted through the mesh arranged between the electrode plate and the porous transport layer, thereby improving the micro-flow field and optimizing the fluid transmission and distribution.
3. For some applications, such as a proton exchange membrane water electrolyzer, the enhanced flow field realized by using the composite plate assembly of the present disclosure improves the ability to remove hydrogen from the surface of the catalyst layer, and limits the enrichment of hydrogen gas and its permeation to the anode.
4. In the electrochemical reaction device, by welding the mesh to the electrode plate, the contact resistance between the mesh and the electrode plate can be effectively reduced and/or the structure stability of the flow field channels can be further improved.
5. During or after the welding process of the metal mesh and the electrode plate, laser nitriding can be performed in a nitrogen atmosphere (for example, more than 99%) or a mixed atmosphere of nitrogen-argon, nitrogen-hydrogen or nitrogen-ammonia, so as to form a high-quality metal nitriding layer on the surface of the metal mesh. Metal nitrides with high crystallinity and high stoichiometric ratio can usually have high conductivity, oxidation resistance, etc.
6. The composite plate assembly of the present disclosure can be directly used for assembling electrochemical reaction devices, and can be further coated with other functional layers on the surface of the electrode plate as needed.

### Examples

### Example 1: Preparation of titanium mesh and electrode plate assembly

The electrode plate with the cathode flow field facing upwards was placed and precisely aligned on the graphite base;
then the titanium mesh cut to the required size was placed and aligned accordingly on the top of the cathode flow field;
subsequently, the molten quartz plate and steel frame were pressed on the titanium mesh and fixed with bolts to reach a contact pressure of 0.5 Mpa to 1 Mpa;
the welding fixture was transferred to an airtight chamber equipped with optical fiber laser head;
nitrogen gas with a purity of 99.999% was introduced into the chamber and maintained at a nitrogen pressure of 120 mbar higher than the ambient pressure;
the surface temperature was controlled to 1500°C by using a diode laser head equipped with a rectangular laser beam and with a scanning speed of 6 mm/s, so that the welding and surface nitriding of the titanium mesh/electrode plate composite assembly were completed simultaneously.

FIG. 5 shows a three-dimensional schematic diagram of the laboratory welding fixture used in the above-mentioned preparation process.

### Example 2 Morphology and element abundance test of prepared composite plate assembly

The morphology and element abundance of the composite plate assembly prepared in Example 1 were tested.

### 1. Surface morphology

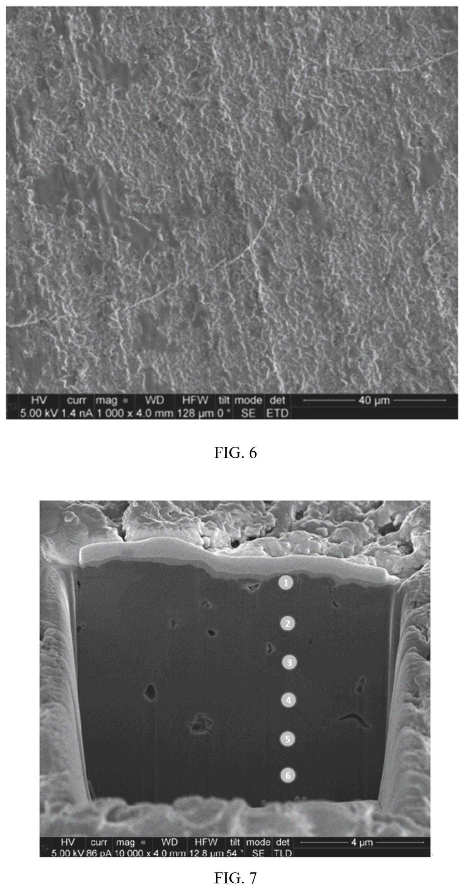

FIG. 6 is a scanning electron microscope (SEM) photograph of the surface morphology of the titanium nitride coating of the composite plate assembly prepared according to Example 1 of the present disclosure. As shown in FIG. 6, it can be seen that the surface coating is uniform, dense, flat and without obvious defects.

FIG. 7 is the cross-sectional view of the coating obtained by FIB (focused ion beam) technology. It can be seen that although there are a few voids in some areas, the coating is well combined with the substrate without obvious delamination.

### 2. Element abundance test

Surface analysis was performed on the coating material approximately 6 microns below the surface using energy-dispersive X-ray spectroscopy (EDX) technology. Six points were sequentially tested from the outside to the inside (see FIG. 7). The abundance of nitrogen element gradually decreased from the saturation state of the outer layer to 80% at 5 microns, and the abundance at 6 microns was 44%.

Table 2 shows the nitrogen abundance at six sampling points of the FIB-SEM cross-section in FIG. 7, which was the data obtained by EDX analysis.

**Table 2**

| Test point | depth | Detected N element |
|---|---|---|
| 1 | 1 micron | 100 % Saturated |
| 2 | 2 microns | 100 % Saturated |
| 3 | 3 microns | 100 % Saturated |
| 4 | 4 microns | 83 % |
| 5 | 5 microns | 80 % |
| 6 | 6 microns | 44 % |

As previously mentioned, the nitriding process is accompanied by the diffusion of nitrogen into the titanium-based material, which results in the in-situ formation of titanium nitride, so the abundance of nitrogen element gradually decreases from the outside to the inside.

### 3. Crystalline phase analysis of surface coating

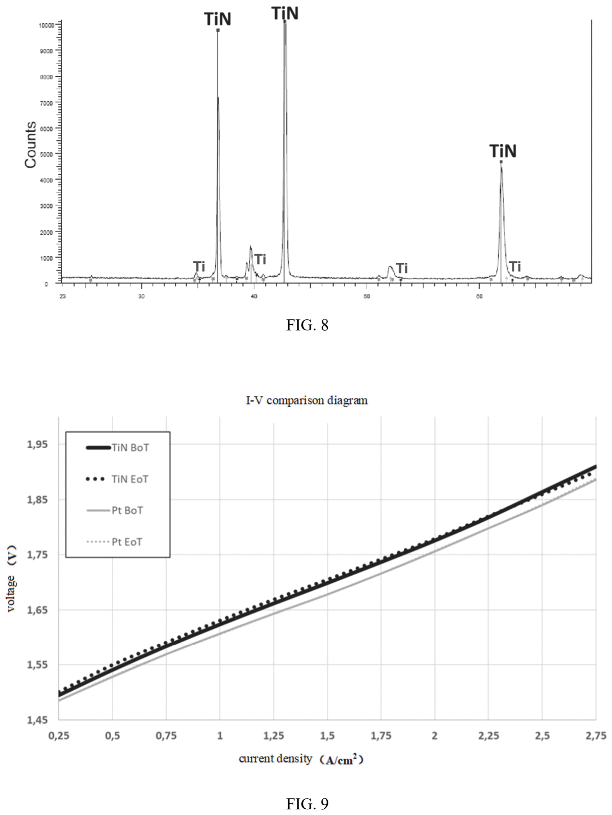

The crystalline phase of the surface coating of the sample prepared in Example 1 was analyzed by EDX, and the X-ray diffraction (XRD) small angle diffraction pattern of the titanium bipolar plate was obtained, as shown in FIG. 8. It can be seen that the characteristic peaks of titanium metal as the substrate are relatively small, indicating that the surface coating is relatively thick, probably more than 10 microns. Several main peaks in the spectrum correspond to TiN, and the mass ratio is greater than 75%, which is the main crystalline phase composition of the coating. However, titanium nitride having other stoichiometric ratio, such as α-TiN_{0.3} and Ti₂N, accounts for a relatively small proportion and is not the main crystalline phase.

Table 3 below shows the results of crystalline phase analysis of the surface coating of the sample prepared in Example 1.

**Table 3 crystalline phase analysis based on XRD spectrum of FIG. 7**

| Sample | TiN (osbomite) | Ti₂N | α-TiN_{0.3} | Ti metal |
|---|---|---|---|---|
| Newly formed coating | ~ 78 % | 3% | ~19 % | ≤ 1 % |

Therefore, it can be confirmed that titanium nitride with in-situ growth, uniform distribution and high stoichiometric ratio can be obtained by this process.

### Example 3 Assembly of proton exchange membrane water electrolyzer and electrochemical test

The composite plate assembly prepared in Example 1 was assembled into the proton exchange membrane water electrolyzer, and the electrochemical test was performed for a total time of 200 h.

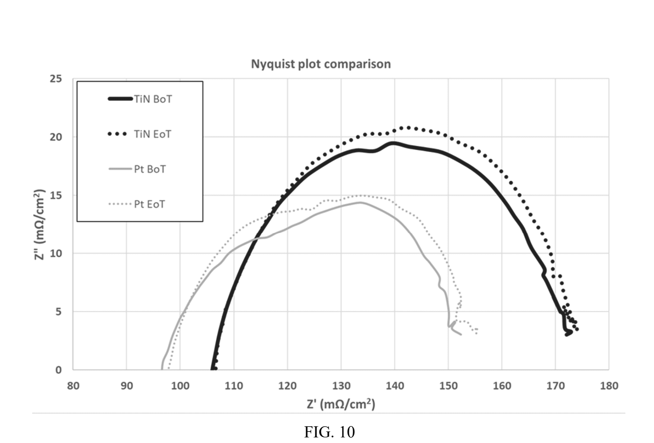

Under the same conditions, the bipolar plate with a platinum-coated surface was also used as a reference sample for testing. FIG. 9 shows the polarization curve and FIG. 10 shows the impedance spectrum.

In FIG. 9, the thick line represents titanium bipolar plate nitrided with laser; thin line represents titanium bipolar plate coated with platinum. Except for the bipolar plate, the components of the cell and test conditions are exactly the same. Temperature: 75°C. Except for measuring the polarization curves and impedance spectrum, the cell was operated at 3 A/cm² for a total of 180 h. BoT: beginning of test; EoT: end of test.

FIG. 10 is the impedance spectrum of the proton exchange membrane water electrolyzer at 0.5 A/cm², where the thick line represents titanium bipolar plate nitrided with laser; the thin line represents titanium bipolar plate coated with platinum, and the other conditions are the same as those in FIG. 9.

From the polarization curve (FIG. 9) and impedance spectrum (FIG. 10), it can be seen that the ohmic resistance of the cell has not changed significantly within 180 h. According to previous literature reports, the titanium plate without effective protective layer will be obviously corroded in the 50-hour test and the ohmic resistance of the cell will be significantly improved. Therefore, the experimental data show that titanium nitride coating can effectively protect titanium bipolar plate, which is similar to platinum-coated bipolar plate.

## Claims

1. A composite plate assembly for use in an electrochemical reaction device, **characterized in that** it comprises:
a porous transport layer,
an electrode plate, and
a mesh disposed between the porous transport layer and the electrode plate and in contact with the electrode plate.

2. The composite plate assembly according to claim 1, **characterized in that** the mesh is a metal mesh and the electrode plate is a metal plate.

3. The composite plate assembly according to claim 1 or 2, **characterized in that** the electrode plate is a titanium-based plate and the mesh is a titanium-based mesh; or
the mesh is in contact with the electrode plate by welding; or
the mesh has a thickness of 0.1 mm to 1 mm.

4. The composite plate assembly according to claim 1 or 2, **characterized in that** the electrode plate has flow field channels formed thereon, and at least one of thickness, pore size and porosity of the mesh is adapted to width of the flow field channels.

5. The composite plate assembly according to claim 4, **characterized in that**,
the flow field channels have a width of greater than 2 mm, and at least one of the following conditions is satisfied: the mesh has a thickness of 0.3 mm to 0.5 mm, or the mesh has a longest pore size of 1 mm to 1.4 mm and a shortest pore size of 0.4 mm to 0.7 mm, or the mesh has a porosity of 70% to 80%; or
the flow field channels have a width of 1.5 mm to 2 mm, and at least one of the following conditions is satisfied: the mesh has a thickness of 0.2 mm to 0.4 mm, or the mesh has a longest pore size of 1.2 mm to 1.6 mm and a shortest pore size of 0.5 mm to 0.8 mm, or the mesh has a porosity of 75% to 90%; or
the flow field channels have a width of less than 1.5 mm, and at least one of the following conditions is satisfied: the mesh has a thickness of 0.1 mm to 0.3 mm, or the mesh has a longest pore size of 1.4 mm to 1.8 mm and a shortest pore size of 0.7 mm to 0.9 mm, or the mesh has a porosity of 80% to 95%.

6. The composite plate assembly according to claim 1 or 2, **characterized in that** the electrode plate has flow field channels formed thereon, and the direction of the longest pore size of the mesh is perpendicular to the direction of the flow field channels.

7. The composite plate assembly according to claim 1 or 2, **characterized in that** channels and lands are formed on the surface of the electrode plate, and the channels serve as the flow field channels.

8. A method for preparing a composite plate assembly for use in an electrochemical reaction device, **characterized in that**, the method comprises:
providing an electrode plate and a mesh; and
welding the mesh onto the electrode plate.

9. The method according to claim 9, **characterized in that** the welding is performed under an inert atmosphere, and the inert atmosphere includes nitrogen or argon gas.

10. The method according to claim 8 or 9, **characterized in that** the welding includes resistance welding, ultrasonic welding, arc welding, sintering, diffusion welding or laser welding.

11. The method according to claim 8 or 9, **characterized in that** the welding is performed in an airtight chamber, and pressure inside the airtight chamber is greater than pressure outside the airtight chamber.

12. The method according to claim 10, **characterized in that** the welding includes laser welding, and welding parameters of the laser welding are controlled so that the surface temperature of the mesh is between 900°C and 1500°C.

13. An electrochemical reaction device, **characterized in that**, it comprises the composite plate assembly according to any one of claims 1 to 7, or comprises the composite plate assembly prepared by the method according to any one of claims 8 to 12;

14. The electrochemical reaction device according to claim 13, which is a water electrolyzer or a fuel cell.

15. A method for an electrochemical reaction, **characterized in that** it comprises:
performing the electrochemical reaction by using the composite plate assembly according to any one of claims 1 to 7, the composite plate assembly prepared by the method according to any one of claims 8 to 12, or the electrochemical reaction device according to any one of claims 13 to 14.
